# EUROPÄISCHE PATENTSCHRIFT

(11) **EP 2 694 354 B1**
(45) Veröffentlichungstag und Bekanntmachung des Hinweises auf die Patenterteilung: **08.07.2015**
(21) Anmeldenummer: 12713012.8
(22) Anmeldetag: 26.03.2012
(51) Int. Cl.: B62D 1/16, B62D 5/00

(54) **VORRICHTUNG ZUR GABE EINES HAPTISCH ERFAHRBAREN SIGNALS AUF EINE LENKWELLE EINES FAHRZEUGS**
DEVICE FOR TRANSMITTING A HAPTIC SIGNAL TO A STEERING SHAFT OF A VEHICLE
DISPOSITIF POUR TRANSMETTRE UN SIGNAL HAPTIQUE À UN ARBRE DE DIRECTION D'UN VÉHICULE

(30) Priorität: 08.04.2011 DE 102011007014
(43) Veröffentlichungstag der Anmeldung: 12.02.2014
(73) Patentinhaber: Schaeffler Technologies AG & Co. KG, 91074 Herzogenaurach (DE)
(72) Erfinder: HOFMANN, Alexander, 91056 Erlangen (DE)
(86) Internationale Anmeldenummer: PCT/EP2012/055300
(87) Internationale Veröffentlichungsnummer: WO 2012/136499

(56) Entgegenhaltungen:
- EP-A1- 1 382 501
- EP-A1- 1 482 200
- EP-A2- 1 334 896

## Beschreibung

### Gebiet der Erfindung

Die Erfindung betrifft eine Vorrichtung zur Gabe eines haptisch erfahrbaren Signals auf eine Lenkwelle eines Fahrzeugs.

### Hintergrund der Erfindung

Es ist bekannt, über ein Lenkrad haptisch erfahrbare Signale zu geben, die den Bediener beispielsweise in bestimmten Situationen warnen oder informieren sollen. Hierzu werden entsprechende Vibratoren verwendet, die entweder lenkradseitig verbaut sind und ein Signal geben, oder die unter Verwendung eines Motors ein Moment an die Lenkwelle geben, das seinerseits lenkradseitig als Vibrationssignal erfasst werden kann. Jedoch werden mitunter nicht nur Warnsignale übertragen, sondern gegebenenfalls auch aktive Lenkeingriffe vorgenommen, d. h., dass über einen solchen Motor einen der Lenkverdrehung entgegenwirkendes Gegendrehmoment erzeugt wird, um gegebenenfalls bis zu einem gewissen Grad zurückzulenken und das Fahrzeug zu führen.

Aus der nachveröffentlichten deutschen Patentanmeldung DE 10 2010 044 540.1 ist bekannt, haptisch erfahrbare Signale dadurch zu erzeugen, dass ein Motor zur Gabe eines über die Lenkwelle als haptisches Signal erfahrbaren Moments an die Lenkwelle vorgesehen ist, wobei die Motorabtriebswelle parallel zur Lenkwelle verläuft und über ein Getriebe mit dieser gekoppelt ist.

Diese dort beschriebene Einrichtung ist nicht zuletzt aufgrund der Verwendung eines Elektromotors und einer mechanischen Kopplung mit der Lenkwelle relativ teuer. Des Weiteren benötigt der Einbau der Motorabtriebswelle mit dazugehörigem Motor parallel zur Lenkwelle in axialer Richtung relativ viel Bauraum.

Die EP 1482200 A1 offenbart eine magneto-rheologische Bremse und einen damit ausgestatteten Lenkmechanismus. Die magneto-rheologische Bremse umfasst eine Fluidleitung mit einer magneto-rheologischen Flüssigkeit, welche in ihrer Viskosität über einen Viskositätsregulator verändert wird.

Die EP 1334896 A2 beschreibt ein Bedienelement für ein Stellorgan mit einer Vorrichtung zur Kraftrückkopplung, wobei die Freigängigkeit des Bedienelements mittels einer zusätzlichen Behinderungseinrichtung, insbesondere in Form eines Bewegungsdämpfers, erheblich einschränkbar ist.

Die EP 1382501 A1 offenbart eine Strömungsbremse mit einer, über eine Welle angetriebenen Umlaufverdrängerpumpe zum Fördern eines hydraulischen Fluids in einem Kreislauf. In dem Kreislauf sind ein Steuerventil und ein Drosselventil parallel zu der Umlaufverdrängerpumpe geschaltet, wobei das Steuerventil zum Bremsen der Welle das Fluid durch das Drosselventil leitet.

Auch ist es bekannt, zur Signalerzeugung ein Bremsmoment über eine geeignete Einrichtung, z. B. einen Riemen, an die Lenkwelle zu übertragen, jedoch ist eine ruhige und gleichmäßige Wahrnehmung des Bremsmoments mit den bisherigen Vorrichtungen sehr schlecht umsetzbar ist, da die Kennlinie der Bremswirkung in Abhängigkeit von der Zustellbewegung der Bremsmittel sehr steil verläuft.

### Zusammenfassung der Erfindung

Der Erfindung liegt damit das Problem zugrunde, eine Vorrichtung anzugeben, die eine diesbezüglich verbesserte Vorrichtung zur Gabe eines haptisch erfahrbaren Signals auf eine Lenkwelle eines Fahrzeugs ermöglicht.

Zur Lösung dieses Problems ist eine Vorrichtung gemäß Anspruch 1 vorgesehen.

Bei einer Vorrichtung der eingangs genannten Art ist erfindungsgemäß eine hydraulische Pumpe und ein ansteuerbares Drosselelement vorgesehen, wobei die mit der Lenkwelle bewegungsgekoppelte Pumpe bei Drehung der Lenkwelle ein Fluid in dem Kreislauf fördert, wobei mittels dem Drosselelement ein veränderbarer Strömungswiderstand erzeugbar ist.

Somit wird bei der erfindungsgemäßen Vorrichtung vorteilhafterweise kein Motor benötigt, der beispielsweise am oder parallel zu einer Lenkwelle angeordnet ist. Die Vorrichtung weist einen hydraulischen Kreislauf auf, umfassend eine Pumpe und ein ansteuerbares Drosselelement, wobei die Pumpe bewegungsgekoppelt zur Lenkwelle ist. Mit Hilfe der Pumpe wird bei Drehung der Lenkwelle ein Fluid in den Kreislauf gefördert, wobei mittels dem Drosselelement ein veränderbarer Strömungswiderstand erzeugbar ist. Das Drosselelement, beispielsweise ein Drosselventil, bewirkt eine verstellbare, durch das Ventil verursachte Querschnittsverengung der Fluidleitung. Das Drosselelement ist mit einer Steuerungseinrichtung verbunden, die wiederum mit einem Lenkwinkelsensor, welcher an der Lenkwelle angeordnet ist, verbunden wird und hierüber die Signale, welche von dem Lenkwinkelsensor aufgrund der Drehung der Lenkwelle erfasst werden, empfängt. Bedingt von der Querschnittsverengung in der Fluidleitung ändert sich durch den erhöhten Durchflusswiderstand der Volumenstrom des Fluids in dem hydraulischen Kreislauf, in Abhängigkeit vom am Ventil gegebenen Druckgefälle. Somit wird eine Regulierung des Gesamtflusses des verwendeten Fluids ermöglicht. Mit Hilfe der alternierenden Änderung des Strömungswiderstandes kann somit ein haptisches Signal erzeugt werden, das an der Lenkwelle spürbar bzw. über die Lenkwelle an das Lenkrad übertragbar ist. Durch den hydraulischen Kreislauf lässt sich ein kompakter und kostengünstiger Aufbau realisieren, der es ermöglicht, das haptische Signal gleichmäßig zu erzeugen und als eine haptisch fühlbare Rückmeldung über das Lenkrad an den Bediener zu vermitteln.

Erfindungsgemäß kann die Pumpe direkt oder über ein Getriebe mit der Lenkwelle verbunden sein. Die Übertragung der Drehbewegung auf die Pumpe kann folglich direkt erfolgen oder mittels einer Getriebeübersetzung. Eine Getriebeübersetzung hat zur Folge, dass ein Eingangssignal - die Drehung der Lenkwelle - aufgrund der Getriebeübersetzung im Übersetzungsverhältnis, beispielsweise 1:5, verstärkt wird. Eine geringe Lenkwellendrehung führt deshalb zu einer großen Förderleistung der Pumpe.

Als Pumpe kann beispielsweise eine Impellerpumpe oder eine Flügelradpumpe verwendet werden, wobei selbstverständlich auch andere Pumpen eingesetzt werden können. Eine Impellerpumpe oder eine Flügelradpumpe arbeiten rotativ, entsprechend also der Lenkwellenbewegung, weshalb diese entweder direkt oder über ein Getriebe auf die Pumpe gegeben werden kann. Denkbar ist auch die Verwendung einer hydraulischen Kolben-Zylinder-Pumpe, die linear arbeitet, bei der also der Kolben sich linear in dem Zylinder bewegt. Bei dieser wird das Fluid zwischen den beiden Fluidkammern des Zylinders durch die Kolbenbewegung hin- und hergepumpt. Bei diesem Pumpentyp ist die Drehbewegung der Lenkwelle über eine geeignete Mechanik in eine Linearbewegung des Kolbens bzw. seiner Kolbenstange umzusetzen, z.B. über eine Schubstange. Zwar kann dieser Prozess nicht endlos erfolgen, sondern ist über die Endanschläge des Kolbens im Hydraulikzylinder begrenzt, gleichwohl kann ein haptische Signal auch mit dieser Pumpe aufgrund der Fluidförderung erzeugt werden.

Eine Impellerpumpe oder eine Flügelradpumpe lässt gegebenenfalls eine geringe Rückströmung zu, weshalb ein totales Blockieren der Lenkwellenbewegung dann nicht möglich ist. Dies ist jedoch in manchen Fällen gewünscht, um dem Lenkenden das Gefühl eines Endanschlags zu vermitteln. Im Falle der Verwendung einer Kolben-Zylinder-Pumpe ist die Darstellung eines solchen Endanschlags möglich, da ein solcher tatsächlich zylinderseitig gegeben ist. Ein Simulieren eines solchen Endanschlags vor Erreichen des tatsächlichen Endanschlags ist hier, da eben keine Rückströmung gegebenen ist, z. B. durch Betätigung des Drosselelements möglich.

Weiterhin ist vorgesehen, dass der hydraulische Kreislauf mittels Schläuchen ausgebildet ist, wobei selbstverständlich auch andere Verbindungselemente eingesetzt werden können. Der Vorteil von Schläuchen liegt in deren Flexibilität, sodass der verfügbare Bauraum optimal ausgenutzt werden kann. Eine Montage von Schläuchen ist beispielsweise mit Spannschellen leicht realisierbar. Des Weiteren sind kleinste Biegeradien möglich, was ebenfalls für eine optimale Ausnutzung des zur Verfügung gestellten Bauraums ermöglicht.

Zur Förderung des Fluids weist die bewegungsgekoppelte Pumpe je nach Drehrichtung der Lenkwelle eine Druckseite und eine Saugseite auf. Mit Hilfe des Wechselspiels von Druckseite und Saugseite ist es demnach unerheblich, ob die Lenkwelle durch den Benutzer - axial gesehen - links herum oder rechts herum gedreht wird. Das Fluid wird in beiden Fällen durch den hydraulischen Kreislauf gefördert und in seinem Strömungsverhalten durch das Drosselelement beeinflusst.

Zur Erzeugung eines veränderbaren Strömungswiderstandes umfasst das Drosselelement ein Proportionalventil mit zwei anschließenden Kanalabschnitten, die einen unterschiedlichen Strömungsquerschnitt aufweisen, um somit durch Förderung des Fluids in die zwei Kanalabschnitte eine variable Veränderung des Strömungswiderstandes zu ermöglichen, woraus ein Bremsmoment resultiert und als eine haptisch fühlbare Rückmeldung über das Lenkrad an den Bediener vermittelt werden kann.

Eine zweckmäßige Alternative zum Proportionalventil sieht vor, das Drosselelement an nur einem der beiden Kanalabschnitte anzuordnen. Dies ermöglicht einen Mindestfluss des Fluids, so dass eine vollständige Blockierung der Lenkung vermieden werden kann, wenn beispielsweise die Elektronik von dem Drosselelement, beispielsweise dem Drosselventil, ausgefallen ist, da immer ein Mindestfluss über den offenen Kanalabschnitt möglich ist.

Eine weitere zweckmäßige Weiterbildung der Erfindung sieht vor, in den Kreislauf einen Druckbehälter und/oder einen Ausgleichsbehälter zu integrieren. Der Druckbehälter ermöglicht es, einem etwaigen Druckabfall, beispielsweise verursacht durch eine Leckage, entgegenzuwirken. Der Ausgleichsbehälter kann ebenso der Stabilisierung des hydraulischen Kreislaufs dienen, indem der Ausgleichsbehälter durch temperaturbedingte Ausdehnung, Verdunstung oder Verdampfung des Fluids dessen Verlust kompensiert.

Der Druckbehälter kann mit einem Schaltventil in dem hydraulischen Kreislauf angeordnet sein und über dieses Schaltventil in den Kreislauf geschaltet werden. Entsprechendes gilt für den Ausgleichsbehälter.

Weiterhin kann vorgesehen sein, dass ein Lenkwinkelsensor integriert ist, der die Drehung der Lenkwelle erfasst und absolutkodierte elektronische Signale, die den aktuellen Lenkwinkel wiedergeben, zur Verfügung stellt, die über eine Kabelverbindung an eine nachgeschaltete Steuereinrichtung gegeben werden, die darauf gestützt beispielsweise ein Lenkgetriebe steuert.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Prinzipdarstellung einer erfindungsgemäßen Vorrichtung einer ersten Ausführungsform;
- Figur 2: eine Detailansicht eines Drosselelements;
- Figur 3: eine Prinzipdarstellung einer erfindungsgemäßen Vorrichtung einer zweiten Ausführungsform; und
- Figur 4: eine Prinzipdarstellung einer erfindungsgemäßen Vorrichtung einer dritten Ausführungsform.

### Ausführliche Beschreibung der Zeichnung

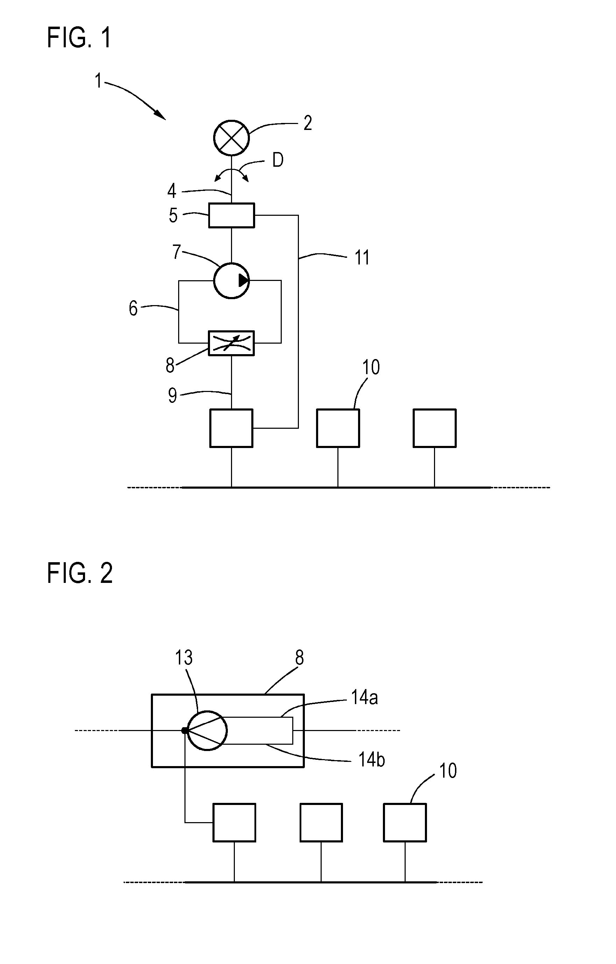

Figur 1 zeigt eine erfindungsgemäße Vorrichtung 1, umfassend einen hydraulischen Kreislauf 6, eine Pumpe 7 und ein ansteuerbares Drosselelement 8, wobei die Pumpe 7 bewegungsgekoppelt zur Lenkwelle 4 ist. Der Drehpfeil D symbolisiert die vertikale Drehung in beide Richtungen der Lenkwelle 4 mit dazugehörigem Lenkrad 2. Das Drosselelement ermöglicht einen geregelten Volumenstrom des Fluids in beiden Richtungen. Somit ist es unerheblich, ob der Bediener die Lenkwelle 4 über ein Lenkrad 2 - axial gesehen - links herum oder rechts herum dreht. Das Fluid wird in beiden Fällen durch den hydraulischen Kreislauf 6 gefördert und in seinem Strömungsverhalten durch das Drosselelement 8 beeinflusst. Mit Hilfe der Pumpe 7 wird bei Drehung der Lenkwelle 4 ein Fluid in den Kreislauf 6 gefördert, wobei mittels dem Drosselelement 8 ein veränderbarer Strömungswiderstand erzeugbar ist. Das Drosselelement 8, beispielsweise ein Drosselventil bewirkt eine verstellbare, durch das Ventil verursachte Querschnittsverengung im Leitungsfluss. Das Drosselelement 8 ist über einen Kabelabgang 9 mit einer Steuerungseinrichtung 10 verbunden, die wiederum über einen Kabelabgang 11 mit einem Lenkwinkelsensor 5, welcher an der Lenkwelle 4 angeordnet ist, verbunden wird und hierdurch die Signale, welche von dem Lenkwinkelsensor 5 aufgrund der Drehung der Lenkwelle 2 erfasst werden, empfängt. Die Steuerungseinrichtung 10 steuert das Drosselelement getaktet an, so dass es kontinuierlich den Ausschnitt vergrößert und verkleinert. Bedingt durch die Querschnittsvariation der Fluidleitung ändert sich durch den variierenden Durchflusswiderstand der Volumenstrom des Fluids in dem hydraulischen Kreislauf 6 in Abhängigkeit vom am Ventil zur Verfügung stehenden Druckgefälle. Somit wird eine Regulierung des Gesamtflusses des verwendeten Fluids ermöglicht. Mit Hilfe der Änderung des Strömungswiderstandes kann somit ein variables Bremsmoment eingestellt werden, welches als eine haptisch fühlbare Rückmeldung über das Lenkrad 2 an den Bediener vermittelt wird.

Für nachfolgende Figuren werden soweit möglich für gleiche Bauteile gleiche Bezugszeichen verwendet.

Figur 2 zeigt eine Detailansicht einer erfindungsgemäßen Vorrichtung 1, vorgesehen mit einem Drosselelement 8, umfassend ein Proportionalventil 13 mit zwei anschließenden Kanalabschnitten 14a und 14b, wobei das Proportionalventil 13 über eine Kabelverbindung 9 mit einer nachgeschalteten Steuereinrichtung 10 verbunden ist. Die Drosselung über das Drosselelement 8, hier beispielsweise ein Proportionalventil 13, ist in beiden Durchflussrichtungen wirksam. Selbstverständlich können auch andere Ventile eingesetzt werden, beispielsweise ein Stromregelventil oder ein Mengenregelventil, solange sie eine feinfühlige Verstellung des Volumenstromes über ein gegebenes Signal der Steuereinrichtung 10 ermöglichen. Über das Signal von der Steuereinrichtung 10 wird je nach Steuerzustand des Proportionalventils 13 das Fluid in dem hydraulischen Kreislauf 6 anteilig über einen Kanalabschnitt 14a mit einem geringem Strömungswiderstand und über einen Kanalabschnitt 14b mit einem hohem Strömungswiderstand geleitet. Durch diese hervorgerufene Änderung des Strömungswiderstandes des Gesamtflusses kann ein variables Bremsmoment eingestellt werden, welches als eine haptisch fühlbare Rückmeldung über das Lenkrad 2 an den Bediener vermittelt wird.

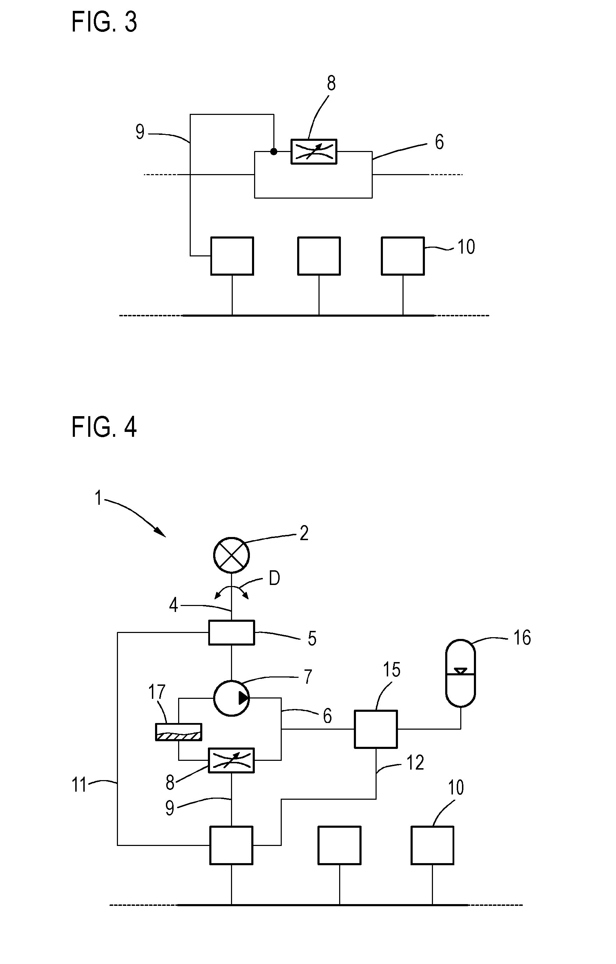

Figur 3 zeigt eine weitere Ausführungsform einer erfindungsgemäßen Vorrichtung 1, wobei das Drosselelement 8 an einem der zwei Kanalabschnitte 14a oder 14b angeordnet ist. Dies ermöglicht einen Mindestfluss des Fluids, so dass eine vollständige Blockierung der Lenkung verhindert werden kann, falls beispielsweise die Elektronik von dem Drosselelement 8, beispielsweise dem Drosselventil, ausgefallen ist.

Figur 4 zeigt eine weitere Ausführungsform einer erfindungsgemäßen Vorrichtung 1, wobei zu dem hydraulischen Kreislauf 6 ein schaltbares Ventil 15 mit einem Druckbehälter 16 verbunden ist. Das Ventil 15 ist über eine Kabelverbindung 12 mit einer nachgeschalteten Steuereinrichtung 10 verbunden. Der Druckbehälter 16 kann über das Ventil 15 eingeschaltet werden. Das Ventil 15 erhält das Signal zum Einschalten von dem Druckbehälter 16 über die Steuereinrichtung 10, die beispielsweise mit einem Drucksensor verbunden ist, welcher in der Figur 4 nicht näher gezeigt ist. Mit Hilfe von dem Druckbehälter 16 kann in dem Fluidkreislauf 6 stets ein betriebsoptimaler Druck gewährleistet werden. Der Druckbehälter 16 kann erforderlich sein, um eine feinfühlige Verstellung des Volumenstromes zu gewährleisten, da der Volumenstrom von Druckdifferenzen abhängig ist. Ein Ausgleichsbehälter 17 kann ebenfalls an dem hydraulischen Kreislauf 6 angeordnet werden, um somit eine stets ausreichende Befüllung des Fluids von dem hydraulischen Kreislauf 6 sicherzustellen.

Selbstverständlich kann auch in einer erfindungsgemäßen Vorrichtung 1 anstelle eines Drosselelements 8, beispielsweise einem Drosselventil, auch ein anderes Ventil verwendet werden. Zu nennen wären beispielsweise ein Stromregelventil oder ein Mengenregelventil. Diese Ventile sind im Gegensatz zum Drosselelement 8, beispielsweise dem Drosselventil, mit einer Druckkompensation ausgerüstet. Dadurch bleibt der eingestellte Volumenstrom auch bei Veränderung des am Ventil vorhandenen Druckgefälles unverändert, und somit kann auf den Ausgleichsbehälter 17 verzichtet werden.

### Bezugszahlenliste

- 1: Vorrichtung
- 2: Lenkrad
- 3: D - Drehrichtung
- 4: Lenkwelle
- 5: Lenkwinkelsensor
- 6: Hydraulischer Kreislauf
- 7: Pumpe
- 8: Drosselelement
- 9: Kabelabgang
- 10: Steuereinrichtung
- 11: Kabelabgang
- 12: Kabelabgang
- 13: Proportionalventil
- 14a: Kanalabschnitt
- 14b: Kanalabschnitt
- 15: Ventil
- 16: Druckbehälter
- 17: Ausgleichsbehälter

## Patentansprüche

1. Vorrichtung zur Gabe eines haptisch erfahrbaren Signals auf eine Lenkwelle (4) eines Fahrzeugs, mit einem hydraulischen Kreislauf (6) umfassend eine Pumpe (7), eine Fluidleitung und ein ansteuerbares Drosselelement (8), wobei die mit der Lenkwelle (4) bewegungsgekoppelte Pumpe (7) bei Drehung der Lenkwelle (4) ein Fluid in dem Kreislauf (6) fördert, wobei das Drosselelement (8) eingerichtet ist, eine kontinuierliche Vergrößerung und Verkleinerung eines Querschnitts der Fluidleitung und damit eine alternierende Änderung eines Strömungswiderstand zu erzeugen, wobei das Drosselelement (8) mit einer Steuerungseinrichtung (10) verbunden ist, durch die das Drosselelement (8) getaktet ansteuerbar ist.

2. Vorrichtung nach Anspruch 1, wobei die Pumpe (7) direkt oder über ein Getriebe mit der Lenkwelle (4) verbunden ist.

3. Vorrichtung nach Anspruch 1 oder 2, wobei die Pumpe (7) eine Impellerpumpe oder eine Flügelradpumpe oder eine Kolben-Zylinder-Pumpe ist.

4. Vorrichtung nach einem der vorangehenden Ansprüche, wobei der hydraulische Kreislauf (6) mittels Schläuchen gebildet ist.

5. Vorrichtung nach einem der vorangehenden Ansprüche, wobei die Pumpe (7) eine Druckseite und eine Saugseite aufweist, wobei die Druckseite als auch die Saugseite je nach Drehrichtung der Lenkwelle (4) wechselt.

6. Vorrichtung nach einem der vorangehenden Ansprüche, wobei das Drosselelement (8) ein Proportionalventil (13) mit zwei anschließenden Kanalabschnitten (14a, 14b) mit unterschiedlichen Strömungsquerschnitten umfasst.

7. Vorrichtung nach einem der Ansprüche 1 bis 5, wobei der Kreislauf (6) zwei Kanalabschnitte (14a, 14b) aufweist, wobei in einem der Kanalabschnitte (14a, 14b) das Drosselelement (8) angeordnet ist.

8. Vorrichtung nach einem der vorangehenden Ansprüche, wobei in dem hydraulischen Kreislauf (6) ein Druckbehälter (16) oder ein Ausgleichsbehälter (17) vorgesehen ist.

9. Vorrichtung nach Anspruch 8, wobei der Druckbehälter (16) oder der Ausgleichsbehälter (17) über ein schaltbares Ventil (15) einschaltbar ist.

10. Vorrichtung nach einem der vorangehenden Ansprüche, wobei ein Lenkwinkelsensor (5) zur Erfassung des Drehwinkels der Lenkwelle (4) angeordnet ist.

11. Vorrichtung nach Anspruch 10, wobei die Steuerungseinrichtung (10) mit dem Lenkwinkelsensor (5), welcher an der Lenkwelle (4) angeordnet ist, verbunden ist und weiterhin eingerichtet ist, Signale zu empfangen, welche von dem Lenkwinkelsensor (5) aufgrund einer Drehung der Lenkwelle (4) erfassbar sind.

## Claims

1. Device for transmitting a haptically perceptible signal to a steering shaft (4) of a vehicle, having a hydraulic circuit (6) comprising a pump (7), a fluid line and a controllable throttle element (8), wherein the pump (7), which is coupled in terms of motion to the steering shaft (4), conveys a fluid in the circuit (6) when the steering shaft (4) rotates, wherein the throttle element (8) is designed to generate a continuous increase and decrease in size of a cross section of the fluid line and thus an alternating change in a flow resistance, wherein the throttle element (8) is connected to a control device (10) by means of which the throttle element (8) can be controlled in cyclic fashion.

2. Device according to Claim 1, wherein the pump (7) is connected to the steering shaft (4) directly or via a gearing.

3. Device according to Claim 1 or 2, wherein the pump (7) is an impeller pump or a vane-type pump or a piston-cylinder pump.

4. Device according to one of the preceding claims, wherein the hydraulic circuit (6) is formed by means of hoses.

5. Device according to one of the preceding claims, wherein the pump (7) has a pressure side and a suction side, wherein the pressure side and the suction side alternate in accordance with the direction of rotation of the steering shaft (4).

6. Device according to one of the preceding claims, wherein the throttle element (8) comprises a proportional valve (13) with two adjoining duct sections (14a, 14b) with different flow cross sections.

7. Device according to one of Claims 1 to 5, wherein the circuit (6) has two duct sections (14a, 14b), wherein the throttle element (8) is arranged in one of the duct sections (14a, 14b).

8. Device according to one of the preceding claims, wherein a pressure vessel (16) or a compensation vessel (17) is provided in the hydraulic circuit (6).

9. Device according to Claim 8, wherein the pressure vessel (16) or the compensation vessel (17) can be activated by way of a switchable valve (15).

10. Device according to one of the preceding claims, wherein a steer angle sensor (5) is arranged so as to detect the rotational angle of the steering shaft (4).

11. Device according to Claim 10, wherein the control device (10) is connected to the steer angle sensor (5) arranged at the steering shaft (4), and is furthermore set up to receive signals that can be detected by the steer angle sensor (5) owing to a rotation of the steering shaft (4).

## Revendications

1. Dispositif pour transmettre un signal haptique à un arbre de direction (4) d'un véhicule, comprenant un circuit hydraulique (6) comprenant une pompe (7), une conduite de fluide et un élément d'étranglement commandable (8), la pompe (7) connectée de manière déplaçable à l'arbre de direction (4), lors de la rotation de l'arbre de direction (4), refoulant un fluide dans le circuit (6), l'élément d'étranglement (8) étant prévu pour générer une augmentation et une réduction continues d'une section transversale de la conduite de fluide et par conséquent une variation en alternance d'une résistance à l'écoulement, l'élément d'étranglement (8) étant connecté à un dispositif de commande (10) par le biais duquel l'élément d'étranglement (8) peut être commandé de manière cadencée.

2. Dispositif selon la revendication 1, dans lequel la pompe (7) est connectée directement ou par le biais d'une transmission à l'arbre de direction (4).

3. Dispositif selon la revendication 1 ou 2, dans lequel la pompe (7) est une pompe à impulseur ou une pompe à roue-hélice ou une pompe à cylindre-piston.

4. Dispositif selon l'une quelconque des revendications précédentes, dans lequel le circuit hydraulique (6) est formé moyen de tuyaux flexibles.

5. Dispositif selon l'une quelconque des revendications précédentes, dans lequel la pompe (7) présente un côté refoulement et un côté aspiration, le côté refoulement ainsi que le côté aspiration s'inversant en fonction du sens de rotation de l'arbre de direction (4).

6. Dispositif selon l'une quelconque des revendications précédentes, dans lequel l'élément d'étranglement (8) comprend une soupape proportionnelle (13) avec deux portions de canal (14a, 14b) s'y raccordant, avec des sections transversales d'écoulement différentes.

7. Dispositif selon l'une quelconque des revendications 1 à 5, dans lequel le circuit (6) présente deux portions de canal (14a, 14b), l'élément d'étranglement (8) étant disposé dans l'une des portions de canal (14a, 14b).

8. Dispositif selon l'une quelconque des revendications précédentes, dans lequel un réservoir de pression (16) ou un réservoir de compensation (17) est prévu dans le circuit hydraulique (6).

9. Dispositif selon la revendication 8, dans lequel le réservoir de pression (16) ou le réservoir de compensation (17) peut être mis en circuit par le biais d'une soupape commutable (15).

10. Dispositif selon l'une quelconque des revendications précédentes, dans lequel un capteur d'angle de direction (5) est prévu pour détecter l'angle de rotation de l'arbre de direction (4).

11. Dispositif selon la revendication 10, dans lequel le dispositif de commande (10) est connecté au capteur d'angle de direction (5) qui est disposé sur l'arbre de direction (4) et est en outre prévu pour recevoir des signaux qui peuvent être détectés par le capteur d'angle de direction (5) sur la base d'une rotation de l'arbre de direction (4).
